# EUROPEAN PATENT APPLICATION

(11) **EP 3 235 660 A1**
(43) Date of publication of application: **25.10.2017**
(21) Application number: 15869685.6
(22) Date of filing: 04.11.2015
(51) Int. Cl.: B60B 9/04, B60C 7/00

(54) **NON-PNEUMATIC TIRE**

(30) Priority: 17.12.2014 JP 2014254941
(71) Applicant: Bridgestone Corporation, Tokyo 104-8340 (JP)
(72) Inventor: NISHIDA, Masashi, Tokyo 104-8340 (JP)
(74) Representative: Oxley, Robin John George
(86) International application number: PCT/JP2015/081094
(87) International publication number: WO 2016/098477

(57) **Abstract**

A non-pneumatic tire (1) of the present invention is provided with: an attachment body (11) attached to an axle; an outer cylindrical body (13) which surrounds the attachment body (11) from the outside in a tire radial direction; a coupling member (15) which displaceably couples the attachment body (11) and the outer cylindrical body (13); a cylindrical tread member (16) which is wrapped externally around the outer cylindrical body (13); and a protective member (41) which covers a side surface in a tire width direction (H) of the outer cylindrical body (13) from the outside in the tire width direction (H).

## Description

### [Technical Field]

The present invention relates to a non-pneumatic tire in which filling of pressurized air is not necessary, when in use.

Priority is claimed on Japanese Patent Application No. 2014-254941, filed on December 17, 2014, the content of which is incorporated herein by reference.

### [Background Art]

Conventionally, a non-pneumatic tire disclosed in the following Patent Document 1 is known. Anon-pneumatic tire includes an attachment body attached to an axle, an outer cylindrical body which surrounds the attachment body from the outside in a tire radial direction, a coupling member which displaceably couples the attachment body and the outer cylindrical body, and a cylindrical tread member which is wrapped externally around the outer cylindrical body.

### [Document of Related Art]

### [Patent Document]

[Patent Document 1] Japanese Unexamined Patent Application, First Publication No. 2014-118128

### [Summary of Invention]

### [Technical Problem]

However, in conventional non-pneumatic tires, there is room for improvement in terms of preventing damage, for example, to an outer cylindrical body or a coupling member from being occurred at the time of riding over a curbstone.

The present invention is made in consideration of the above-described circumstances, and an object of the present invention is to suppress damage from being occurred at the time of riding over a curbstone.

### [Solution to Problem]

A non-pneumatic tire according to the present invention includes an attachment body attached to an axle, an outer cylindrical body which surrounds the attachment body from the outside in a tire radial direction, a coupling member which displaceably couples the attachment body and the outer cylindrical body, and a cylindrical tread member which is wrapped externally around the outer cylindrical body, wherein a protective member which covers a side surface in a tire width direction of the outer cylindrical body from the outside in the tire width direction is provided in the non-pneumatic tire.

### [Effects of Invention]

According to the present invention, it is possible to suppress damage occurred at the time of riding over a curbstone.

### [Brief Description of Drawings]

Fig. 1 is a view illustrating a first embodiment of a non-pneumatic tire according to the present invention and is a schematic perspective view illustrating a part of a disassembled non-pneumatic tire.
Fig. 2 is a side view of the non-pneumatic tire illustrated in Fig. 1 when viewed from one side in a tire width direction.
Fig. 3 is an enlarged view illustrating a main portion of Fig. 2.
Fig. 4 is a tire side view of a first part case body when viewed from one side in a tire width direction or a tire side view of a second part case body when viewed from the other side in a tire width direction in the non-pneumatic tire illustrated in Fig. 1.
Fig. 5 is a cross-sectional view of a portion including a ring-shaped body and a tread member in the non-pneumatic tire illustrated in FIG. 1.
FIG. 6 is a view illustrating a second embodiment of a non-pneumatic tire according to the present invention and is a cross-sectional view of a portion including a ring-shaped body and a tread member.
Fig. 7 is a view illustrating a third embodiment of a non-pneumatic tire according to the present invention and is a cross-sectional view of a portion including a ring-shaped body and a tread member.
Fig. 8 is a view illustrating a fourth embodiment of a non-pneumatic tire according to the present invention and is a cross-sectional view of a portion including a ring-shaped body and a tread member.
Fig. 9 is a view illustrating a non-pneumatic tire used for a verification test and is a cross-sectional view of a portion including a ring-shaped body and a tread member.

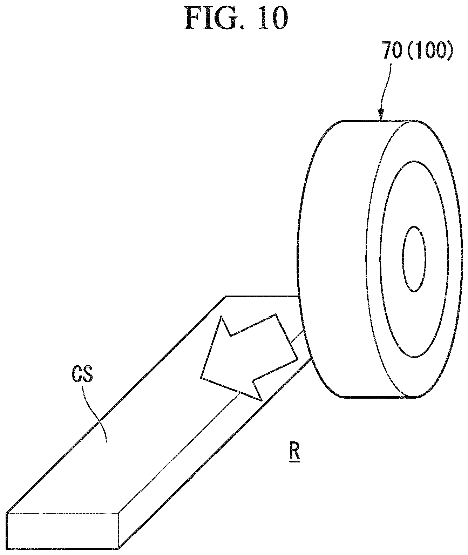

Fig. 10 is a perspective view for describing a verification test.

### [Description of Embodiments]

### (First embodiment)

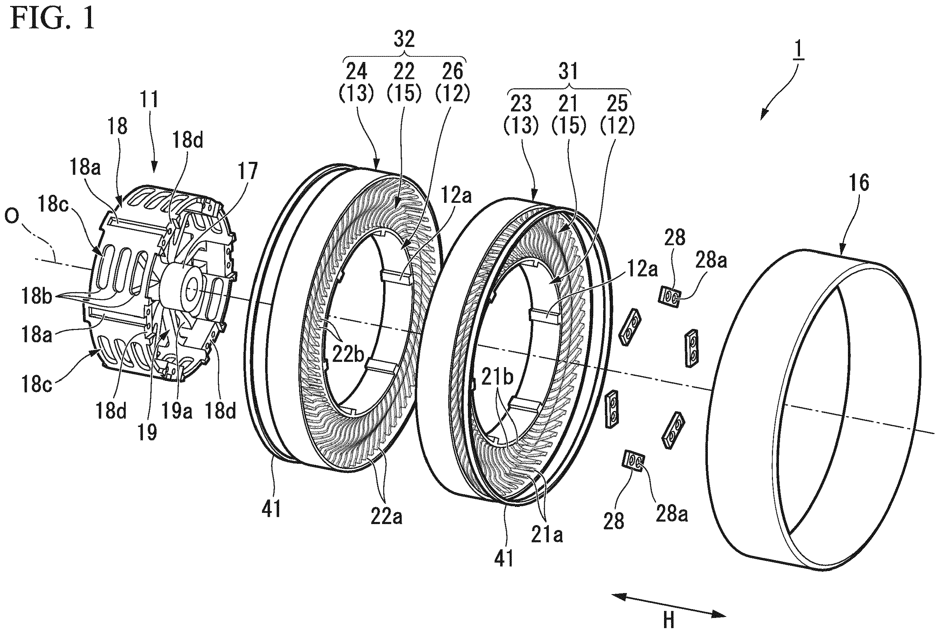

Hereinafter, a first embodiment according to the present invention will be described with reference to Figs. 1 to 6.

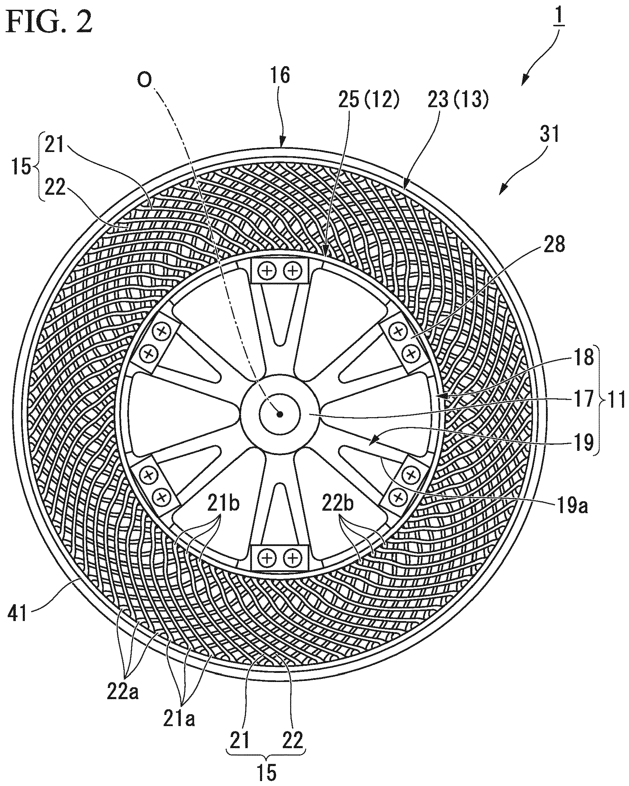

As illustrated in Figs. 1 and 2, a non-pneumatic tire 1 of the present embodiment includes an attachment body 11 attached to an axle (not illustrated), a cylindrical ring-shaped body 13 (an outer cylindrical body) which surrounds the attachment body 11 from the outside in a tire radial direction, a plurality of coupling members 15 arranged in a tire circumferential direction between the attachment body 11 and the ring-shaped body 13 and configured to couple the attachment body 11 and the ring-shaped body 13 in an elastically relatively displaceable manner, and a cylindrical tread member 16 which is wrapped externally around the ring-shaped body 13.

Also, the non-pneumatic tire 1 of the present embodiment may be employed for a two-wheeled vehicle such as a bicycle or the like, may travel in a state in which a camber angle is at about 30 degrees, and may be employed for a small-sized vehicle traveling at a low speed such as a handle type electric wheelchair specified in Japanese Industrial Standard JIS T 9208, for example. In addition, the size of the non-pneumatic tire 1 is not particularly limited, but may be in a range of 3.00 to 8 or the like, for example. Also, the non-pneumatic tire 1 may be employed for passenger cars.

The size in this case is not particularly limited, but may be 155/65R 13 or the like, for example.

The above-described attachment body 11, the ring-shaped body 13, and the tread member 16 are coaxially arranged on a common axis. Hereinafter, this common axis is defined as an axis O, a direction along the axis O is defined as a tire width direction H, a direction perpendicular to the axis O is defined as a tire radial direction, and a direction of revolving around the axis O is defined as a tire circumferential direction. Also, a central portion in the tire width direction H of the attachment body 11, the ring-shaped body 13, and the tread member 16 are arranged in a state of being aligned with each other. In addition, an outer diameter of the ring-shaped body 13 is uniform regardless of a position in the tire width direction H.

A fitting cylinder portion 17 to which a distal end of the axle is fitted, an outer ring portion 18 which surrounds the fitting cylinder portion 17 from the outside in the tire radial direction, and a plurality of ribs 19 which couple the fitting cylinder portion 17 and the outer ring portion 18 are provided in the attachment body 11.

The fitting cylinder portion 17, the outer ring portion 18, and the ribs 19 are integrally formed of a metal material such as an aluminum alloy, for example. The fitting cylinder portion 17 and the outer ring portion 18 are formed in a cylindrical shape and are coaxially arranged on the axis O. The plurality of ribs 19 are disposed at regular intervals in the circumferential direction, for example.

A plurality of key groove portions 18a recessed toward the inside in the tire radial direction and configured to extend in the tire width direction H are formed on an outer circumferential surface of the outer ring portion 18 at intervals in the tire circumferential direction. On the outer circumferential surface of the outer ring portion 18, the key groove portions 18a are open only on one side (outside the vehicle body) in the tire width direction H and are closed on the other side (inside the vehicle body) in the tire width direction H.

In the outer ring portion 18, a plurality of lightening holes 18b penetrating through the outer ring portion 18 in the tire radial direction are formed at intervals in the tire width direction H at portions positioned between key groove portions 18a adjacent to each other in the tire circumferential direction. A plurality of hole rows 18c constituted by the plurality of lightening holes 18b are formed at intervals in the tire circumferential direction. Similarly, a lightening hole 19a penetrating through the ribs 19 in the tire width direction H is also formed in each of the ribs 19.

A concave portion 18d into which a plate 28 having a through hole 28a is fitted is formed at a position corresponding to the key groove portions 18a at an end edge on one side in the tire width direction H of the outer ring portion 18. The concave portion 18d is recessed toward the other side in the tire width direction H. Also, on a wall surface facing one side in the tire width direction H among wall surfaces constituting the concave portion 18d, an internal thread portion communicating with the through hole 28a of the plate 28 that is fitted into the concave portion 18d is formed.

Also, a plurality of through holes 28a are formed in the plate 28 at intervals in the tire circumferential direction. Similarly, a plurality of internal thread portions are formed on the wall surface of the concave portion 18d at intervals in the tire circumferential direction. In the illustrated example, a case in which two through holes 28a and two internal thread portions are formed is taken as an example, but the number is not limited to two.

A cylindrical exterior body 12 is fitted to the outside of the attachment body 11. A ridge portion 12a protruding toward the inside in the tire radial direction and extending over the entire length in the tire width direction H is formed on an inner circumferential surface of the exterior body 12. A plurality of ridge portions 12a are formed on the inner circumferential surface of the exterior body 12 at intervals in the tire circumferential direction and respectively engaged with the key groove portions 18a formed on the attachment body 11.

Thus, the exterior body 12 is fixed to the attachment body 11 by screwing bolts (not illustrated) into the internal thread portions through the through holes 28a of the plate 28 fitted into the concave portion 18d in a state in which the ridge portion 12a is engaged with the key groove portion 18a.

Also, among wall surfaces constituting the key groove portion 18a, a pair of side walls facing each other in the tire circumferential direction are formed to be perpendicular to a bottom wall surface. Similarly, among outer surfaces of the ridge portion 12a, a pair of side wall surfaces erected from the inner circumferential surface of the exterior body 12 and a top wall surface facing the inside in the tire radial direction are formed to be perpendicular to each other. Therefore, the sizes in the tire circumferential direction of the ridge portion 12a and the key groove portion 18a are equal to each other.

With the configuration as above, the ridge portion 12a is precisely engaged with the key groove portion 18a with little rattling.

The coupling member 15 couples an outer circumferential surface side of the attachment body 11 and an inner circumferential surface side of the ring-shaped body 13 in an elastically relatively displaceable manner. In the illustrated example, the coupling member 15 includes a first coupling plate 21 and a second coupling plate 22 which couple an outer circumferential surface of the exterior body 12 fitted to the outside of the attachment body 11 and the inner circumferential surface of the ring-shaped body 13. Both of the first coupling plate 21 and the second coupling plate 22 are formed of an elastically deformable plate.

A plurality of first coupling plates 21 are disposed in the tire circumferential direction at positions on one side in the tire width direction H. A plurality of second coupling plates 22 are disposed in the tire circumferential direction at positions on the other side in the tire width direction H. That is, the plurality of first coupling plates 21 and second coupling plates 22 are disposed at intervals from each other in the tire width direction H and are disposed in the tire circumferential direction at respective positions. For example, 60 of the first coupling plates 21 and the second coupling plates 22 may be respectively provided in the tire circumferential direction.

A plurality of coupling members 15 are respectively disposed at positions rotationally symmetrical with respect to the axis O between the exterior body 12 and the ring-shaped body 13. Also, all the coupling members 15 have the same shape and the same size, and the width of the coupling members 15 in the tire width direction H is smaller than the width of the ring-shaped body 13 in the tire width direction H.

Therefore, adjacent first coupling plates 21 in the tire circumferential direction are not in contact with each other. Similarly, adjacent second coupling plates 22 in the tire circumferential direction are not in contact with each other. Also, adjacent first coupling plates 21 and second coupling plates 22 in the tire width direction H are not in contact with each other. In addition, the first coupling plates 21 and the second coupling plates 22 have the same width in the tire width direction H and thickness.

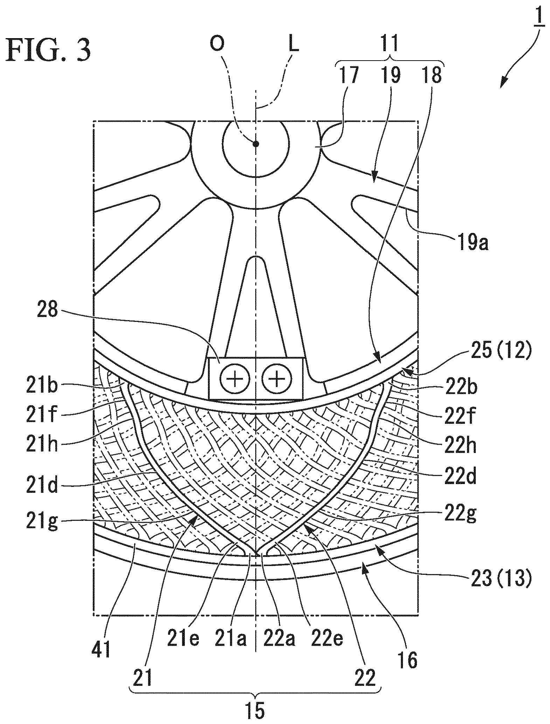

As illustrated in Fig. 3, in the first coupling plate 21, one end portion (an outer end portion) 21a coupled to the ring-shaped body 13 is positioned on one side in the tire circumferential direction relative to the other end portion (an inner end portion) 21b coupled to the exterior body 12. On the other hand, in the second coupling plate 22, one end portion (an outer end portion) 22a coupled to the ring-shaped body 13 is positioned on the other side in the tire circumferential direction relative to the other end portion (an inner end portion) 22b coupled to the exterior body 12.

Therefore, the respective one end portions 21a and 22a of the first coupling plate 21 and the second coupling plate 22 which constitute one coupling member 15 are coupled to the same position on the inner circumferential surface of the ring-shaped bodies 13 in the tire circumferential direction in a state in which their positions in the tire width direction H are different from each other.

A plurality of curved portions 21d to 21f, and 22d to 22f which are curved in the tire circumferential direction are formed in the first coupling plate 21 and the second coupling plate 22 at intermediate portions positioned between the one end portions 21a and 22a and the other end portions 21b and 22b.

The plurality of curved portions 21d to 21f and 22d to 22f are formed along an extending direction in which the first coupling plate 21 and the second coupling plate 22 extend in a tire side view when the non-pneumatic tire 1 is viewed from the tire width direction H. In the illustrated example, the plurality of curved portions 21d to 21f in the first coupling plate 21 and the plurality of curved portions 22d to 22f in the second coupling plate 22 are adjacent to each other in the extending direction while having curvature directions opposite to each other.

The plurality of curved portions 21d to 21f formed in the first coupling plate 21 include a first curved portion 21d curved to protrude toward the other side in the tire circumferential direction, a second curved portion 21e positioned between the first curved portion 21d and the one end portion 21a and curved to protrude toward one side in the tire circumferential direction, and a third curved portion 21f positioned between the first curved portion 21d and the other end portion 21b and curved to protrude toward one side in the tire circumferential direction. The second curved portion 21e is continuous with the one end portion 21a.

The plurality of curved portions 22d to 22f formed in the second coupling plate 22 include a first curved portion 22d curved to protrude toward one side in the tire circumferential direction, a second curved portion 22e positioned between the first curved portion 22d and the one end portion 22a and curved to protrude toward the other side in the tire circumferential direction, and a third curved portion 22f positioned between the first curved portion 22d and the other end portion 22b and curved to protrude toward the other side in the tire circumferential direction. The second curved portion 22e is continuous with the one end portion 22a.

In the illustrated example, the radii of curvature of the first curved portions 21d and 22d in a tire side view are larger than those of the second curved portions 21 e and 22e and the third curved portions 21f and 22f, and the first curved portions 21d and 22d are disposed at central portions in the extending directions of the first coupling plate 21 and the second coupling plate 22.

Lengths of the first coupling plate 21 and the second coupling plate 22 are equal to each other. The other end portions 21b and 22b of the first coupling plate 21 and the second coupling plate 22 are coupled, in a tire side view, to respective positions at the same distance on one side and the other side in the tire circumferential direction about the axis O on the outer circumferential surface of the exterior body 12 from a position facing the one end portions 21a and 22a in the tire radial direction.

Specifically, the other end portions 21b and 22b of the first coupling plate 21 and the second coupling plate 22 are coupled to the outer circumferential surface of the exterior body 12 so that the angle formed by a line connecting the one end portion 21a and the other end portion 21b of the first coupling plate 21 and a line connecting the one end portion 22a and the other end portion 22b of the second coupling plate 22 is at, for example, 20° or more and 135° or less.

Also, the first curved portions 21d and 22d, the second curved portions 21e and 22e, and the third curved portions 21f and 22f in each of the first coupling plate 21 and the second coupling plate 22 have respective protruding directions which are opposite to each other in the tire circumferential direction while they are the same in size.

With the configuration as above, as illustrated in Fig. 3, a shape of each coupling member 15 in a tire side view is symmetrical with respect to a virtual line L extending in the tire radial direction and passing through the one end portions 21a and 22a of the respective first coupling plate 21 and second coupling plate 22.

The above-described exterior body 12, the ring-shaped bodies 13, and the plurality of coupling members 15 are integrally formed of a synthetic resin material, for example. The synthetic resin material may be, for example, a single resin material, a mixture containing two or more kinds of resin material, or a mixture containing one or more kinds of resin material and one or more kinds of elastomer, and furthermore, may include additives such as anti-aging agents, plasticizers, fillers, or pigments, for example.

Incidentally, as illustrated in Fig. 1, the exterior body 12 is divided into a first exterior body 25 positioned on one side in the tire width direction H and a second exterior body 26 positioned on the other side in the tire width direction H. Similarly, the ring-shaped body 13 is divided into a first ring-shaped body 23 (a partial cylinder) positioned on one side in the tire width direction H and a second ring-shaped body 24 (a partial cylinder) positioned on the other side in the tire width direction H. In the ring-shaped body 13, end portions in the tire width direction H of the first and second ring-shaped bodies 23 and 24 (a plurality of partial cylinders) disposed adjacent to each other in the tire width direction H are coupled to each other.

In the illustrated example, each of the exterior body 12 and the ring-shaped body 13 is divided at the central portion in the tire width direction H.

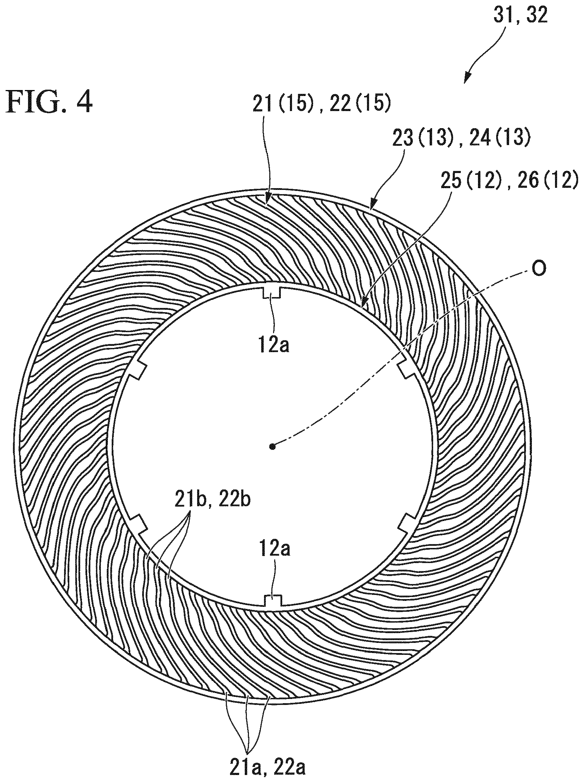

Then, as illustrated in Fig. 4, the first exterior body 25 and the first ring-shaped body 23 are integrally formed with the first coupling plate 21, for example, by injection molding. The second exterior body 26 and the second ring-shaped body 24 are integrally formed with the second coupling plate 22, for example, by injection molding.

Hereinafter, a unit in which the first exterior body 25, the first ring-shaped body 23, and the first coupling plate 21 are integrally formed is referred to as a first part case body 31, and a unit in which the second exterior body 26, the second ring-shaped body 24, and the second coupling plate 22 are integrally formed is referred to as a second part case body 32.

Also, when the first part case body 31 is taken as an example, injection molding methods available to be used include a general method of molding the entire first part case body 31 at once, insert molding in which the remaining portions other than insert parts are injection molded with some portions among the first exterior body 25, the first ring-shaped body 23, and the first coupling plate 21 being provided as the insert parts, a so-called two-color molding, or the like. In addition, when the entirety of the first part case body 31 is injection-molded at once, the plurality of ridge portions 12a formed on the exterior body 12 may be used as a gate portion.

These points apply to the second part case body 32.

Also, at the time of injection-molding, when the first part case body 31 is taken as an example, the first exterior body 25, the first ring-shaped body 23, and the first coupling plate 21 may be formed of different materials, and may be formed of the same material. As such a material, metal materials or resin materials are examples, however, resin materials, particularly thermoplastic resins, are preferable from the perspective of reducing weight.

These points apply to the second part case body 32.

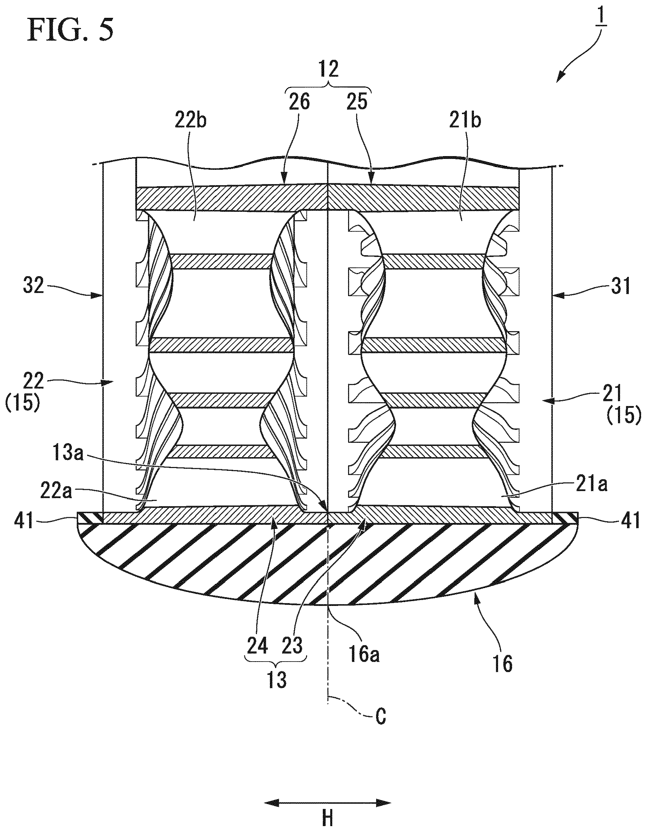

As illustrated in Fig. 5, in each of the first part case body 31 and the second part case body 32, a central portion in the tire width direction H of the first coupling plate 21 and the second coupling plate 22 is positioned on an inner side (a center side) in the tire width direction H relative to a central portion in the tire width direction of the first ring-shaped body 23 and the second ring-shaped body 24. Also, a central portion in the tire width direction H of the first exterior body 25 and the second exterior body 26 is on the inner side in the tire width direction H relative to the central portion in the tire width direction H of the first coupling plate 21 and the second coupling plate 22.

However, the present invention is not limited thereto, and in each of the first part case body 31 and the second part case body 32, at least two or more central portions may be coincident with each other among the central portion in the tire width direction H of the first coupling plate 21 and the second coupling plate 22, the central portion in the tire width direction of the first ring-shaped body 23 and the second ring-shaped body 24, and the central portion in the tire width direction H of the first exterior body 25 and the second exterior body 26.

The first ring-shaped body 23 and the second ring-shaped body 24 are coupled to each other by, for example, welding, fusing, bonding, or the like, edges thereof facing each other in the tire width direction H, and thus a joint portion 13a at which the end portions of the first and second ring-shaped bodies 23 and 24 in the tire width direction H are coupled is provided in the ring-shaped body 13. Also, in the case of welding, hot plate welding or the like may be employed, for example. Similarly, end edges of the first exterior body 25 and the second exterior body 26 facing each other in the tire width direction H are in contact with each other.

However, the first exterior body 25 and the second exterior body 26 may be formed to have smaller widths in the tire width direction H than those of the first ring-shaped body 23 and the second ring-shaped body 24.

In this case, the end edges of the first exterior body 25 and the second exterior body 26 facing each other in the tire width direction H are separated in the tire width direction H when the first part case body 31 and the second part case body 32 are coupled. Therefore, it is possible to prevent, for example, burrs from being generated on the inner circumferential surface of the exterior body 12 fitted to the outside of the attachment body 11.

As illustrated in Fig. 4, the first part case body 31 and the second part case body 32 have the same shape and the same size. Also, when the first part case body 31 and the second part case body 32 are integrally coupled as described above, end edges of the first ring-shaped body 23 and the second ring-shaped body 24 abut each other in the tire width direction H and are coupled in a state in which directions of the first part case body 31 and the second part case body 32 are opposite to each other in the tire width direction H while the first part case body 31 and the second part case body 32 are aligned in the tire circumferential direction so that each of the coupling members 15 is line-symmetrical in the tire side view as described above.

Thereafter, the non-pneumatic tire 1 can be obtained by providing the tread member 16 to the first part case body 31 and the second part case body 32 which are integrally combined.

As illustrated in Figs. 1 and 5, the tread member 16 is formed in a cylindrical shape and integrally covers an outer circumferential surface side of the ring-shaped body 13 over the entire region. The tread member 16 is formed wider than the ring-shaped body 13 in the tire width direction H and both side end portions of the tread member 16 in the tire width direction H protrude from the ring-shaped body 13 to the outside in the tire width direction H. An inner diameter of the tread member 16 is uniform over the entire length in the tire width direction H and an inner circumferential surface of the tread member 16 is in close contact with the outer circumferential surface of the ring-shaped body 13 over the entire region. Further, the inner diameter of the tread member 16 is the distance in the tire radial direction between the inner circumferential surface of the tread member 16 and the axis O.

The outer circumferential surface of the tread member 16 has a curved surface shape protruding toward the outside in the tire radial direction in a cross-sectional view taken along the tire width direction H as illustrated in Fig. 5, and an outer diameter of the tread member 16 gradually decreases in the tire width direction H with distance away from a maximum outer diameter portion 16a thereof. The maximum outer diameter portion 16a of the tread member 16 is positioned at a center portion in the tire width direction H of the non-pneumatic tire 1. The thickness of the tread member 16 in the tire radial direction gradually decreases in the tire width direction H with distance away from the maximum outer diameter portion 16a thereof. Further, the outer diameter of the tread member 16 is the distance in the tire radial direction between the outer circumferential surface of the tread member 16 and the axis O.

The tread member 16 is formed to be line-symmetrical with respect to a tread center plane C in the cross-sectional view taken along the tire width direction H. Further, the tread center plane C is a virtual plane that passes through a center of the tread member 16 in the tire width direction H and is perpendicular to the axis O. The tread center plane C passes over the maximum outer diameter portion 16a of the tread member 16 and a joint portion 13a of the ring-shaped body 13 in the present embodiment.

The tread member 16 is formed of a natural rubber and/or a vulcanized rubber in which the rubber composition is vulcanized, a thermoplastic material, or the like, for example.

As the thermoplastic material, a thermoplastic elastomer, a thermoplastic resin, or the like is an example. As thermoplastic elastomers, amide-based thermoplastic elastomers (TPA), ester-based thermoplastic elastomers (TPC), olefin-based thermoplastic elastomers (TPO), styrene-based thermoplastic elastomers (TPS), urethane-based thermoplastic elastomers (TPU), a thermoplastic rubber cross-linker (TPV), other thermoplastic elastomers (TPZ), or the like, specified in Japanese Industrial Standard JIS K6418, are examples.

As the thermoplastic resin, urethane resins, olefin resins, vinyl chloride resins, polyamide resins, or the like are examples. Also, it is preferable to form the tread member 16 with a vulcanized rubber from the perspective of wear resistance.

In the present embodiment, the non-pneumatic tire 1 further includes a protective member 41. The protective member 41 covers a side surface in the tire width direction H of the ring-shaped body 13 from the outside in the tire width direction H, and is positioned outside the coupling member 15 in the tire width direction H. The protective member 41 is provided respectively on both side surfaces of the ring-shaped body 13 in the tire width direction H and is coupled to the tread member 16. The protective member 41 is formed in annular shape to cover the side surface of the ring-shaped body 13 over the entire circumference and is fixed to the side surface of the ring-shaped body 13 over the entire circumference. The protective member 41 is disposed on both side end portions of the tread member 16 in the tire width direction H and is also fixed to inner circumferential surfaces of the both side end portions of the tread member 16 over the entire circumference.

In the cross-sectional view taken along the tire width direction H, the protective member 41 is formed in a rectangular shape in which a pair of sides extend in the tire width direction H and the other pair of sides extend in the tire radial direction. In the cross-sectional view taken along the tire width direction H, the protective member 41 is larger in the tire width direction H than in the tire radial direction. The thickness which is the size in the tire radial direction of the protective member 41 is uniform regardless of a position in the tire width direction H and the width which is the size in the tire width direction H of the protective member 41 is uniform regardless of a position in the tire radial direction. In the present embodiment, a side surface of the protective member 41 toward the inside in the tire width direction H is fixed to the side surface of the ring-shaped body 13, and an outer circumferential surface of the protective member 41 facing the outside in the tire radial direction is fixed to an inner circumferential surface of a side end portion of the tread member 16.

Further, the protective member 41 can be fixed to the ring-shaped body 13 or the tread member 16, for example, with an adhesive interposed therebetween, or these can be coupled by screwing.

The thickness of the protective member 41 is equal to the thickness of the side end portion in the tire width direction H of the ring-shaped body 13, and an inner circumferential surface of the protective member 41 is formed on the same plane as an inner circumferential surface of a side end portion of the ring-shaped body 13. The width of the protective member 41 is equal to the width of the side end portion of the tread member 16, and the protective member 41 does not protrude from the side end portion of the tread member 16 toward the outside in the tire width direction H. Further, the width of the protective member 41 may be 1 mm or more and 5 mm or less.

The protective member 41 is formed of a material different from that of the ring-shaped body 13 and the tread member 16, and is formed separately from the ring-shaped body 13 and the tread member 16. The protective member 41 is formed of, for example, a natural rubber and/or a vulcanized rubber in which the rubber composition is vulcanized, a thermoplastic material, a metal material, or the like. Further, as the thermoplastic material, a material similar to the materials exemplified for the tread member 16 can be employed. A rigidity of the protective member 41 may be lower or higher than a rigidity of the ring-shaped body 13 and the tread member 16, and a hardness of the protective member 41 may be lower or higher than a hardness of the ring-shaped body 13 and the tread member 16.

As described above, according to the non-pneumatic tire 1 according to the present embodiment, since the protective member 41 covers the side surface of the ring-shaped body 13 from the outside in the tire width direction H, when the non-pneumatic tire 1 rides over a curbstone, collision of the ring-shaped body 13 or the coupling member 15 against the curbstone can be prevented by the protective member 41 colliding with the curbstone. Thereby, damage to the ring-shaped body 13 or the coupling member 15 can be suppressed from being occurred at the time of riding over a curbstone.

Further, when the width of the protective member 41 is 1 mm or more and 5 mm or less, damage can be reliably suppressed from being occurred while suppressing an increase in weight. That is, when the width of the protective member 41 is less than 1 mm, there is a possibility that the ring-shaped body 13 may not be sufficiently protected by the protective member 41. In addition, when the width of the protective member 41 is greater than 5 mm, the protective member 41 may be excessively heavy.

### (Second embodiment)

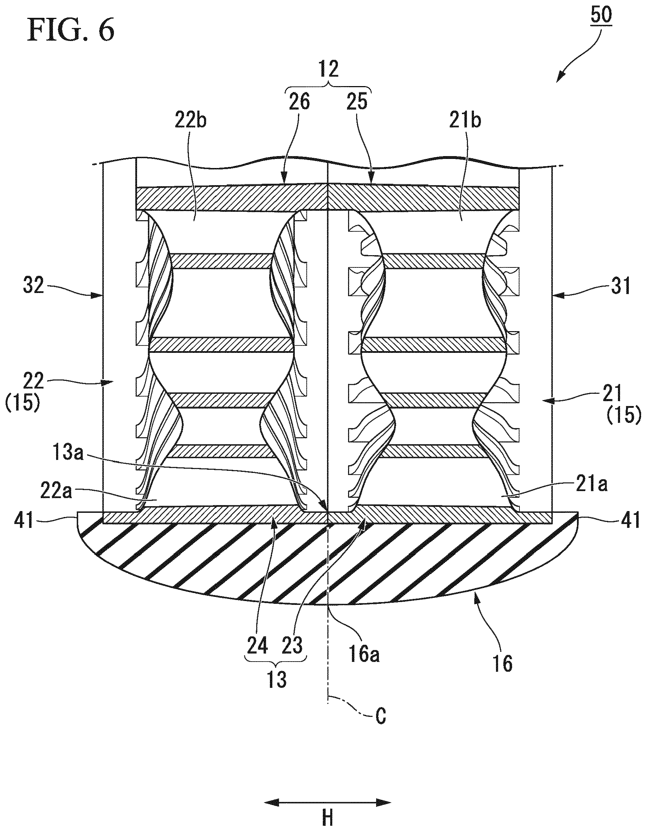

Next, a non-pneumatic tire of a second embodiment according to the present invention will be described with reference to Fig. 6.

In the second embodiment, components the same as those in the first embodiment will be denoted by the same reference signs, description thereof will be omitted, and only different points will be described.

In a non-pneumatic tire 50 according to the present embodiment, a protective member 41 is integrally formed with a tread member 16. The protective member 41 is formed of the same material as that of the tread member 16 and protrudes from each of both end portions of the protective member 41 in a tire width direction H toward the inside in a tire radial direction.

As described above, according to the non-pneumatic tire 50 according to the present embodiment, since the protective member 41 is integrally formed with the tread member 16, the protective member 41 can be easily formed.

### (Third embodiment)

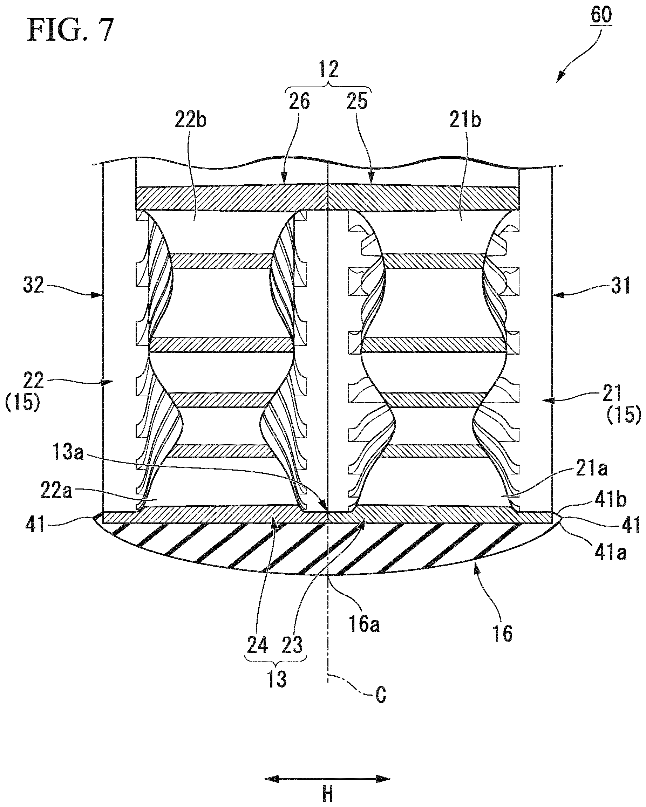

Next, a non-pneumatic tire of a third embodiment according to the present invention will be described with reference to Fig. 7.

In the third embodiment, components the same as those in the second embodiment will be denoted by the same reference signs, description thereof will be omitted, and only different points will be described.

In a non-pneumatic tire 60 according to the present embodiment, a protective member 41 is formed in a triangular shape protruding toward the outside in a tire width direction H and protrudes from a tread member 16 toward the outside in the tire width direction H in a cross-sectional view taken along the tire width direction H.

A portion 41a (hereinafter, referred to as "outside portion") positioned outside the protective member 41 in a tire radial direction gradually widens in a tire width direction H from the outside toward the inside in the tire radial direction.

In the outside portion 41a of the protective member 41, an outer circumferential surface of the portion protruding from the tread member 16 toward the outside in the tire width direction H is smoothly continuous with an outer circumferential surface of the tread member 16 in the cross-sectional view taken along the tire width direction H.

A portion 41b (hereinafter, referred to as "inside portion") positioned inside the protective member 41 in the tire radial direction gradually widens in the tire width direction H from the inside toward the outside in the tire radial direction.

An inner circumferential surface of the inside portion 41b of the protective member 41 is an inclined surface extending in a straight line in the cross-sectional view taken along the tire width direction H.

### (Fourth embodiment)

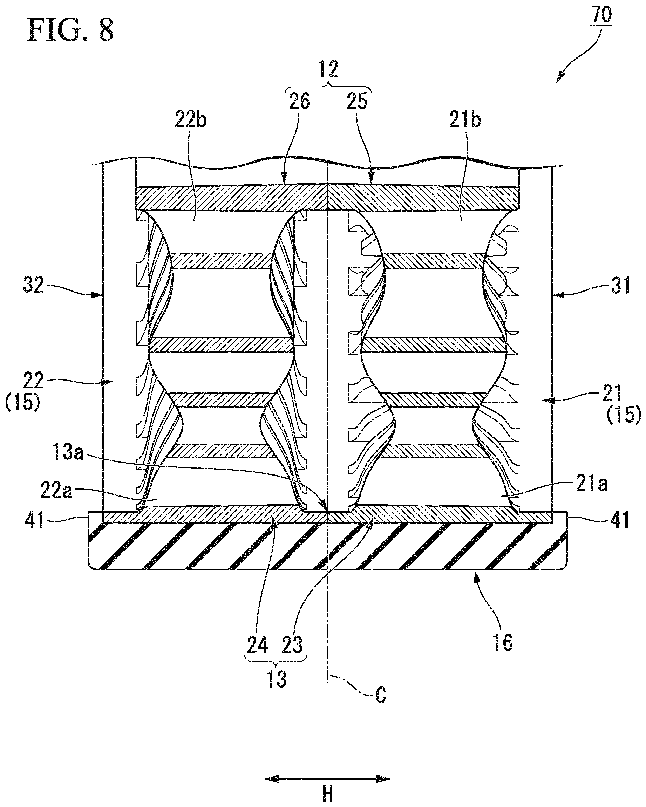

Next, a non-pneumatic tire of a fourth embodiment according to the present invention will be described with reference to Fig. 8.

In the fourth embodiment, components the same as those in the second embodiment will be denoted by the same reference signs, description thereof will be omitted, and only different points will be described.

In a non-pneumatic tire 70 according to the present embodiment, in a cross-sectional view taken along a tire width direction H, a tread member 16 is formed in a rectangular shape in which a pair of sides extend in the tire width direction H and the remaining pair extend in a tire radial direction. The thickness of the tread member 16 is the same over the tire width direction H.

In addition, the technical scope of the present invention is not limited to the above-described embodiments, and various modifications can be made without departing from the spirit and scope of the present invention.

In the above-described embodiments, the protective member 41 is provided respectively on both side surfaces of the ring-shaped body 13 in the tire width direction H, but the present invention is not limited thereto. For example, the protective member 41 may be provided only on any one of both side surfaces of the ring-shaped body 13.

In the above-described embodiments, the protective member 41 is formed in annular shape to cover the side surface of the ring-shaped body 13 in the tire width direction H over the entire circumference, but the present invention is not limited thereto. For example, the protective member 41 may cover a limited part of the side surface of the ring-shaped body 13 in the tire circumferential direction.

Also, the protective member 41 may extend toward the inside in the tire width direction H to cover the inner circumferential surface of the ring-shaped body 13.

Although the configuration of the coupling member 15 being provided with one of each of the first coupling plate 21 and the second coupling plate 22 has been described in the above-described embodiment, instead of this, a plurality of first coupling plates 21 and second coupling plates 22 having different positions from each other in the tire width direction H may be provided for one coupling member 15. Also, a plurality of coupling members 15 may be provided between the exterior body 12 and the ring-shaped body 13 in the tire width direction H.

Also, instead of the above-described embodiment, for example, the other end portions 21b and 22b of the first coupling plate 21 and the second coupling plate 22 may be coupled to each of opposite positions with the axis O therebetween in the tire radial direction on the circumferential surface of the exterior body 12 or may be coupled to positions, on the circumferential surface of the exterior body 12, facing the one end portions 21a and 22a of the first coupling plate 21 and the second coupling plate 22 in the tire radial direction, or the like. In addition, instead of the above-described embodiment, the one end portions 21a and 22a of the first coupling plate 21 and the second coupling plate 22 may be coupled to the inner circumferential surface of the ring-shaped body 13 while positions thereof in the tire circumferential direction are made to be different from each other.

Further, in the above-described embodiment, a gap in the tire width direction H may or may not be provided between the first exterior body 25 and the second exterior body 26. Also, the exterior body 12 and the ring-shaped body 13 may or may not be divided into three or more in the tire width direction H.

In addition, in the above-described embodiment, the exterior body 12, the ring-shaped body 13, and the coupling member 15 are integrally formed by injection molding, for example, but the present invention is not limited to injection molding, and they may be integrally formed by casting or the like, for example. Also, the exterior body 12, the ring-shaped body 13, and the coupling member 15 may be individually formed and coupled to each other.

In addition, the exterior body 12 and the attachment body 11 may be integrally formed. That is, the exterior body 12 may be included in the attachment body 11.

Further, in the above-described embodiment, the configuration in which the coupling member 15 is indirectly couple to the attachment body 11 with the exterior body 12 interposed therebetween is employed, but the present invention is not limited thereto, and a configuration in which the coupling member 15 is directly coupled to the attachment body 11 may be employed, for example.

In addition, each configuration (constituent element) described in the above embodiments, modified examples, rewritings, or the like may be combined within a range not departing from the spirit of the present invention, and additions, omissions, substitutions, and other changes to the configuration are possible. In addition, the present invention is not limited by the embodiments described above, and is limited only by the claims.

Next, a verification test was conducted on the operation and effects described above.

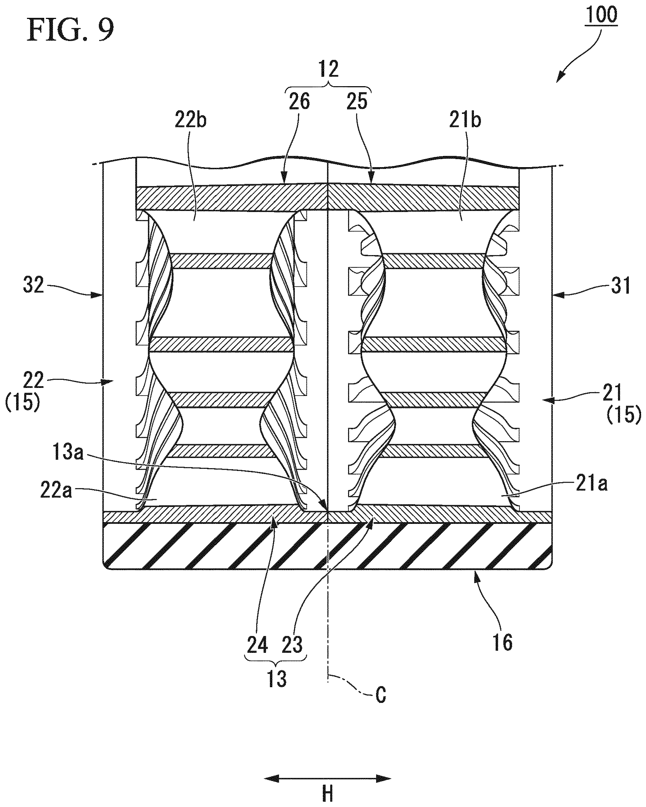

The non-pneumatic tire 70 illustrated in Fig. 8 was employed as an example, and a non-pneumatic tire 100 as illustrated in Fig. 9 in which the protective member 41 is not provided in the example of the non-pneumatic tire 70 was employed as a comparative example.

Then, these two types of non-pneumatic tire 70 and 100 were made to repeat riding over a curbstone CS in a state of running on a road surface R adjacent to the curbstone CS at a speed of 60 km per hour while applying a load of 1.3 kN, and the number of instances of riding over the curbstone CS before breakage was measured.

The result was that the number of riding instancesbefore breakage in the non-pneumatic tire 70 of the example was 20% more than that for the non-pneumatic tire 100 of the comparative example.

### [Industrial Applicability]

According to the present invention, it is possible to prevent damage from being occurred at the time of riding over a curbstone.

### [Reference Signs List]

1, 50, 60, 70 Non-pneumatic tire
11 Attachment body
13 Ring-shaped body (outer cylindrical body)
15 Coupling member
16 Tread member
41 Protective member
H Tire width direction

## Claims

1. A non-pneumatic tire comprising:
an attachment body attached to an axle;
an outer cylindrical body which surrounds the attachment body from the outside in a tire radial direction;
a coupling member which displaceably couples the attachment body and the outer cylindrical body; and
a cylindrical tread member which is wrapped externally around the outer cylindrical body,
wherein a protective member which covers a side surface in a tire width direction of the outer cylindrical body from the outside in the tire width direction is provided in the non-pneumatic tire.

2. The non-pneumatic tire according to claim 1, wherein the protective member is integrally formed with the tread member.
